Europäisches Patentamt

**European Patent Office**

**Office européen des brevets**

(11) Publication number: **0 279 551 B1**

(12) **EUROPEAN PATENT SPECIFICATION**

(45) Date of publication of patent specification: **05.05.93**   (51) Int. Cl.⁵: **C08J 9/42**, B29C 67/22, A47C 27/14, C08J 9/30

(21) Application number: **88300842.7**

(22) Date of filing: **02.02.88**

(54) **Continuous process for producing mattresses.**

(30) Priority: **06.02.87 US 11743**

(43) Date of publication of application:
**24.08.88 Bulletin 88/34**

(45) Publication of the grant of the patent:
**05.05.93 Bulletin 93/18**

(84) Designated Contracting States:
**BE CH DE FR GB IT LI NL**

(56) References cited:
**CH−A− 335 938**
**DE−A− 2 701 798**
**GB−A− 705 454**
**GB−A− 1 030 815**
**GB−A− 1 129 436**

(73) Proprietor: **BASF Aktiengesellschaft**
**Carl−Bosch−Strasse 38**
**W−6700 Ludwigshafen(DE)**

(72) Inventor: **Wietsma, Popke**
**Lepelaarstraat 14**
**NL−6883 EM Velp (GLD)(NL)**

Rank Xerox (UK) Business Services
(3. 10/3.6/3.3. 1)

**Description**

The present invention relates to a method for making a composite foamed material. More particularly the present invention relates to a process which may be used in the continuous production of foam composites and particularly slab foam composites.

It is known to produce foam rubber by a number of processes. In the various gel foam processes it is difficult to continuously produce foams having a thickness of greater than 2 to 4 inches (5 to 10 cm) depending on the conditions. No gel foams are subject to even more severe limitations as the foam must gel or set prior to its collapse. The pin and core, Talalay process has been used to produce excellent quality foam rubber with a relatively thick dimension. Unfortunately this process is capital intensive as very special and complicated molds must be used. Furthermore, the process is fairly labour intensive.

It is also known that foams of different polymer composition have different physical properties. It is desirable to manufacture composite foam structures. Composite foams with a core and an outer cover of different types of foam are produced usually by gluing strips of foam together. This is also labour intensive and leaves seams which are weak points where the foam may tear.

CAN − A − 591,979 issued February 2, 1960 to Leon Talalay, assigned to B. F. Goodrich Company, discloses a continuous method of gelling foam. A latex compound is cooled to below room temperature then exposed to a gaseous gelling agent at a temperature from 0 to 10°C. The foam gels. The foam may then be vulcanized, washed, dried and cut into required lengths, in any suitable order. The process disclosed in CAN − A − 591,979 has not, to applicant's knowledge, found wide commercial acceptance. The process of CAN − A − 591,979 is limited to the rate at which the gaseous gelling agent can penetrate to the core of the foam.

GB − A − 705,454 describes the coagulation of a latex foam with $CO_2$ which is free of air. Foam composites with impregnated porous carriers are not mentioned.

The present invention provides a process for the manufacture of a foam composite characterised in that the process comprises:

(i) impregnating a porous carrier with a fluid gelling agent capable of altering the pH of an aqueous polymeric emulsion;

(ii) contacting at least one surface of the porous carrier with one or more compounds of said aqueous polymeric emulsions, said compounds being stabilized with a pH sensitive soap;

(iii) exposing said porous carrier and said one or more compounds to an environment of a fluid gelling agent capable of altering the pH of said one or more compounds for a period of time to gel said compounds; and

(iv) drying and vulcanizing the resulting foam composite.

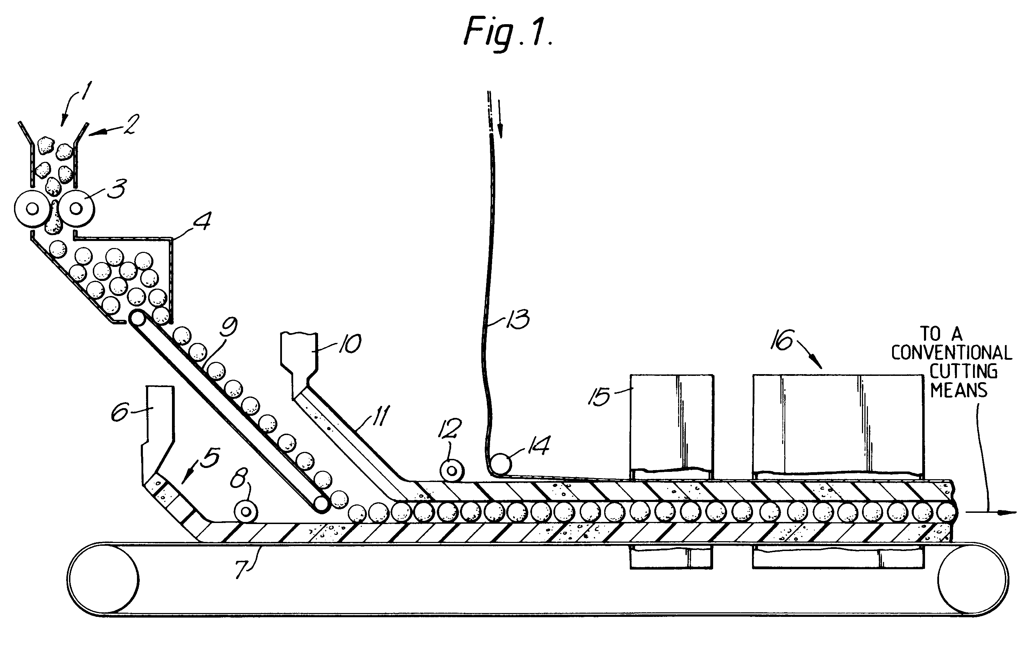

One embodiment of the process of the present invention will be described in conjunction with Figure 1 which is a schematic cross section of an apparatus to carry out the process.

A suitable carrier 1 e.g. an open celled foam is maintained in a hopper 2. The carrier may be any material capable of entraining a fluid gelling agent. A particularly suitable carrier comprises a rubbery open celled foam e.g. urethane foams, natural rubber foam, synthetic rubber foam, and foams of other synthetic materials e.g. rayon or polyvinyl chloride. The foam may have any suitable density ranging from 10 to 400, preferably 30 to 100, most preferably 50 to 100 g/l. In the illustrated embodiment the foam is in the form of particles or crumbs. It is also possible to use continuous slabs or discontinuous slab stock as the carrier.

The carrier is impregnated with a fluid gelling agent. In the illustrated embodiment the carrier passes between compression rolls 3 to compact and compress the carrier. While rolls are shown in the drawing other suitable means may be employed. On leaving the compression rolls the carrier enters a cabinet containing a fluid gelling agent and expands to its original shape. The carrier is thus impregnated with the gelling agent. The gelling agent is an agent which is capable of reducing the pH of wet foam compound. Preferably the gelling agent is gaseous carbon dixoide.

In accordance with the embodiment example of the present invention, a wet foam 5 is delivered from a conventional foaming apparatus 6 e.g. an Oaks® Foamer (trademark). The wet foam is depositied on a conveying apparatus 7 and passed beneath a gauge means 8. In this case the gauge is a roller but suitable gauge and distribution means e.g. a doctor blade or a rake may be used.

An aqueous polymeric emulsion or dispersion may be compounded in a conventional manner as discussed later and then may be foamed to a desired density, typically from 50 to 500, preferably 40 to 300 g/l. It is not necessary that the compound be foamed.

The carrier, impregnated with the gelling agent leaves the cabinet containing gelling agent and is transported by a conveyor means 9 to the surface of the wet foam. In this example, the conveyor means is a conveyor but other suitable devices may also be used.

In the illustrated embodiment a further layer of foam 11 is deposited from a suitable foam distribution means 10 on the upper surface of the carrier impregnated with the gelling agent. The composite foam passes beneath a spreading means or gauge roll 12 to control the thickness of the foam. The spreading means or gauge roll need not be a roll but may be any suitable gauging and distribution device. The apparatus could also provide a textured surface as described in US − A − 4,354,810 issued October 9, 1982, assigned to Polysar®.

In an optional embodiment an open or permeable textile scrim 13 e.g. cotton, polyolefin, polyamide or polyester may be applied to the exposed surface of the foam. Preferably the scrim passes beneath a floating roller 14 which lays the scrim on top of the foam without significantly collapsing the foam or causing the latex to penetrate through the surface of the textile.

The composite then passes into a gelling box 15 which contains an atmosphere of a fluid, preferably gaseous, gelling agent, most preferably carbon dioxide. The rate of travel of the conveyor means 7 should be such that the foam composite will gel by the time the foam passes through the gelling box. The dwell time in the gelling box will depend on a number of factors e.g. the amount of gelling agent contained in the center of the foam by the open celled carrier, and the thickness of the wet foam.

After gelling, the foam passes through a suitable drying means 16 e.g. a hot air circulating overn, a high frequency oven, and the like to dry and vulcanize the foam. The foam slab then is cut to the appropriate length using conventional cutters.

The limiting factor in production will be the rate at which the foam composite can be dried. After gelling the foam will contain 30 to 40 percent water. Preferably the foam is vulcanized then washed by spraying with water. The washed foam is then dried. Preferably, the foam is passed through squeeze rolls to squeeze or wring excess water from the foam. The foam then passes into a dryer. Drying will limit the rate of production of foam. Preferably a high frequency dielectric oven will be used in accordance with the present invention.

In a medium sized plant the production would be expected to be 600 mattresses per day. If the conveyor were an open weave textile the line speed should be in the order of about 1 meter a minute. Depending on line speed and the concentration of carbon dioxide, generally the gelling box should be from 1 to 5 meters in length and the oven should be 10 meters in length with high frequency drying, or 45 meters in length with hot air drying.

The process of the present invention may be employed with any latex which is stabilized with a soap which becomes insoluble at pH's below 7, preferably below 6.5. Such soaps are e.g. metal salts of long chain fatty or rosin acids and oils e.g. alkali metal stearates, palmitate, oleates, alkali metal salts of palm oil and coconut oil and alkali metal salts of rosin acid. Such polymers are e.g. butadiene rubber (SBR), acrylonitrile butadiene rubber (NBR), polydiolefins, polyacrylates, polymers of vinyl or vinylidene chloride and polymers of ethylene vinyl acetate. The above polymers may contain one or more functional monomers.

Typically the SBR of polymers comprise:

from 15 to 40, preferably 20 to 30 weight percent of a mixture comprising from 100 to 50, preferably not less than 70 weight percent of a $C_{8-12}$ vinyl aromatic monomer which may be unsubstituted or substituted by a $C_{1-4}$ alkyl radical or a chlorine or bromine atom; and up to 50, preferably not more than 30 weight percent of one or more monomers selected from: $C_{3-6}$ alkenyl nitriles and $C_{1-3}$ alkyl esters of acrylic and methacrylic acid; and

from 85 to 60, preferably 80 to 70 weight percent of a $C_{4-6}$ conjugated diene monomer which may be unsubstitued or substituted by a chlorine atom.

Some latices are freeze agglomerated styrene butadiene latices comprising 20 to 30 weight percent styrene and 80 to 70 weight percent butadiene, or freezw agglomerated polybutadiene latex. These latices may optionally be reinforced with up to 25 weight percent of a polystryene, high stryrene latex, carbox − ylated SBR latex or PVC.

As noted above the polymers may contain small amounts of functional groups. The polymers may contain up to 10 percent of one or more monomers selected from:

$C_{3-6}$ ethylenically unsaturated aldehydes;

$C_{1-8}$ alkyl or hydroxyalkyl esters of $C_{3-6}$ ethylenically unsaturated carboxylic acid; and

amides of $C_{3-6}$ ethylenically unsaturated carboxylic acids, which amides may be unsubstituted or substi − tuted at the nitrogen atom by up to two radicals selected from:

$C_{1-8}$ alkyl radicals and $C_{1-8}$ hydroxyalkyl radicals.

Some vinyl aromatic monomers are styrene and alpha methyl styrene. Some alkenyl nitriles are acrylonitrile. Some $C_{4-6}$ conjugated diene monomers are butadiene, isoprene and chloroprene.

3

Preferred esters are methyl acrylate and methyl methacrylate. Some $C_{3-6}$ ethylenically unsaturated aldehydes are acrolein. Some $C_{1-8}$ alkyl or hydroxyalkyl esters of $C_{3-6}$ ethylenically unsaturated carboxylic acids are methyl acrylate, methyl methacrylate, ethyl acrylate, ethyl methacrylate, hydroxy − ethyl acrylate, and ethylhexyl acrylate. Some amides of $C_{3-6}$ ethylenically unsaturated carboxylic acids are acrylamide, methacrylamide, N − methylolacrylamide and N − methylolmeth − acrylamide.

Typically the nitrile polymers contain 20 to 40, preferably 25 to 35 weight percent of a $C_{3-6}$ alkenyl nitrile and from 80 to 60, preferably 65 to 75 weight percent of a mixture of at least 85, preferably more than 90, weight percent of a $C_{4-6}$ conjugated diolefin which may be unsubstituted or substituted by a chlorine or bromine atom and up to 15, preferably less than 10, weight percent of one or more monomers selected from :

$C_{8-12}$ vinyl aromatic monomers which are unsubstituted or substituted by a $C_{1-4}$ alkyl radical or a chlorine or bromine atom or a $C_{1-3}$ alkyl ester of acrylic or methacrylic acid. Optionally, the nitrile rubber may contain up to 10 weight percent of one or more of the functional monomers listed above.

Some monomers useful in the production of nitrile rubbers have been discussed above.

Typically the polydiolefin rubbers comprise at least 90 weight percent of one or more $C_{4-6}$ conjugated diolefin monomers which may be unsubstituted or substituted by a chlorine or bromine atom. conjugated diolefins have been discussed above. The conjugated diolefin polymers may contain up to 10 weight percent of one or more of the functional monomers listed above.

The polymer may be an acrylate. The acrylates may comprise at least 60, preferably more than 80, weight percent of a $C_{1-8}$ alkyl or hydroxyalkyl ester of a $C_{3-6}$ ethylenically unsaturated carboxylic acid, preferably acrylic or methacrylic acid. The balance of the polymer may be one or more of the functional monomers listed above other than the $C_{1-8}$ alkyl or hydroxy alkyl esters of $C_{3-6}$ ethylenically unsaturated carboxylic acids.

The polymer may be a co − or homo − polymer of vinyl or vinylidene chloride which may contain up to 10 weight percent of one or more functional monomers described above.

The polymer may be a copolymer at least 60, preferably 75 to 90 weight percent of a $C_{3-6}$ vinyl ester of a $C_{1-8}$ saturated carboxylic acid, and up to 40, preferably from 0 to 25 weight percent of a $C_{2-3}$ olefin. Optionally the polymer may contain up to 10 percent of one or more of the functional monomers discussed above.

A vinyl ester of saturated carboxylic acids is vinyl acetate. Ethylene and propylene are some olefins. Some functional monomers have been discussed above.

The latex may be a latex of natural rubber.

Preferably the latex will comprise a major amount of a non carboxylated polymer with a minimum amount, not more than 25 weight percent of a reinforcing latex, which may be polystyrene, PVC, acrylate, and carboxylated SBR; carbon black may optionally be included in the compound to act as a reinforcing agent.

The latex may be compounded in a suitable manner, depending on the specific application for the foam composite. The compound may contain up to 80 parts of filler per 100 parts by weight of polymer although better foam properties are obtained without or only low amounts of filler. Typically, the filler is used in amounts not exceeding 50, preferably less than 20 parts by weight per hundred parts by weight of polymer. Some fillers are chalk, calcium carbonate, clays and other convenient fillers. In some instances it is desirable to use a filler which releases water of hydration on heating e.g. alumina trihydrate or magnesium hydrate. In some instances where flame retardance is of particular concern small amounts of flame retardants e.g. PVC, chlorinated paraffin waxes, brominated compounds or antimony oxide or mixtures thereof may be included in the compound.

The compound should, where the polymer contains a sufficient degree of unsaturation, contain a vulcanizing agent or a cure paste. Generally, the cure paste will contain sulfur and one or more sulfur containing compounds e.g. dithiocarbamate, or a mercapto − benzothiazole. Typically the cure paste will comprise from 2 to 5, preferably 2.3 parts by dry weight of sulfur, 1 to 3 parts of a sulfur containing compound, from 3 to 5 parts by dry weight of a zinc compound e.g. zinc oxide, from 0.8 to 1.2 preferably 1.0 parts, by dry weight ethyl zimate; 0.5 parts by dry weight of a diphenyl amine − acetone reaction product e.g. Aminox® (Trademark); and 1.0 part by dry weight of a hindered phenol antioxidant e.g. Wingstay L.® (trademark). Preferably, the cure paste is in the form of an aqueous dispersion having a solids content from 40 to 60 weight percent solids. The cure paste should be used to provide from 5 to 10, preferably 8 parts, by dry weight per 100 parts by weight of polymer. Variations in the composition and amount of cure paste will be apparent to those skilled in the art.

As noted above, the latex of the polymer is stabilized with a soap which becomes insoluble at pH's less than 7, preferably less than 6.5. The insolubility of the soap is due to the reaction with hydrogen ions., This soap may be used in the emulstion polymerization of the latex or may be introduced into the latex as a partial or total exchange for the soap used for the polymerization process or the soap used to make a latex from a dry polymer powder. Such exchange may be carried out by known processes such as dialysis of the latex and introduction of the soap.

If the compound is to be foamed, or if the compound contains sufficient filler and other compound ingredients to reduce the stability of the compound further amounts of soap may be added to the latex. Generally, the additional soap may be added in amounts less than 5, usually from 0.5 to 3 parts by weight per 100 parts by weight of polymer.

As noted above, it is not necessary that the compound be foamed and during compounding the amount of foaming should be minimized. Where required the unfoamed compound is fed to the foamer. The compound may be applied in an unfoamed state to provide a surface skin. Preferably two different compounds are used. A latex of a rubbery polymer may be used to provide the foam structure near the core of carrier, and a non foamed latex of a thermoplastic polymer may be applied over the rubbery polymer core. When gelled and vulcanized this composite may also be subject to a heat sealing step to provide a sealed surface and a foam interior. This may be particularly useful in the manufacture of vinyl seats. The labour component in sewing and applying the vinyl cover could be significantly reduced.

A preferred embodiment discussed above contemplates laying a layer of foam, depositing the carrier impregnated with the gelling agent on the foam, and then depositing a further layer of foam over the carrier. The use of an external unfoamed layer is clearly contemplated as discussed above. Furthermore it is not necessary and in some cases may not be desirable that the carrier is uniformly in the center of the foam. It may be desirable that the carrier form at least part of the lower surface of the foam composite, for example in the manufacture of a bench seat for a train, car or bus.

In the embodiment described in association with the drawing the carrier is shown as a particulate carrier. The carrier may also take the form of a continuous slab of foam. A particularly useful carrier is low density polyurethane foam. The slab could run in a longitudinal direction throughout the foam, or preferably run across the foam. In making mattresses it is preferred that the slabs run across the foam. The slabs need not all be of uniform density. The slabs could be applied in a series providing one or more slabs of high density followed by one or more slabs of low density foam followed by one or more slabs of a high density foam. – The cycle is repeated. In this way it is possible to continue to produce a foamed composite which when cut to the appropriate length has a firmer end portion than middle or the other way around. This is suitable for mattess construction as the different foam densities tend to provide different compression resistance.

Normally, in the Talalay process to vary the foam requires a new mold by varying the type and amount of pins (cores). In the Dunlop process it may be possible to only partly rebuild the mold. The present invention provides a larger degree of freedom to the manufacturer since foam properties may be varied by changing the type or amount of the carrier.

In the manufacture of a composite foam in accordance with the present invention it may be advantageous to include means to define the lateral edges of the foam. Such means are disclosed in GB-A-450,920 issued Jan. 22, 1935, to International Latex. The lateral edges of the mold are defined by a continuously moving belt.

The following examples are intended to illustrate and not to limit the invention. In the examples, unless otherwise specified the parts are parts by dry weight.

Example 1

A compound of a high solids SBR latex suitable for use in manufacturing molded foam, and sold under the trademark POLYSAR® 2133 was compounded as follows:

## Compound

| Ingredient | Amount (dry weight) |
|---|---|
| POLYSAR® Latex 2133 | 100 |
| Potassium oleate | 0.5 to 1 |
| Cure paste including zinc oxide (formula described at page 10 of this disclosure) | 8 |

One portion of the compound was frothed, and gelled with $CO_2$ (Talalay process).

One portion of the foam was used to prepare a composite structure in accordance with the present invention. In a laboratory a small slab of polyurethane foam was saturated with carbon dioxide. The compounded latex was frothed to 60 g/l in a laboratory frother. The forthed compound was coated over the carbon dioxide saturated polyurethane foam by placing the urethane in an open mold and filling it with the frothed latex. The composite was placed in a sealed box containing a carbon dioxide environment. After 15 minutes the compostie had gelled. The composite was removed from the carbon dioxide box and cured in a high frequency oven. Following curing the resultant foam was washed and dried in a hot air convection dryer.

The properties of the resulting foam were measured.

Density was measured in accordance with ISO test method 1855.

The indentation hardness was measured in accordance with ISO test method 2439.

The shrinkage was measured as the change in the dimension of the object relative to the mold size.

Several accelerated aging tests were also carried out in accordance with ISO test method 2440.

The results are recorded below.

| Properties | Talalay Process | Present Invention |
|---|---|---|
| Density | 60 | 60 |
| Hardness | 36 kg | 60 kg |
| Shrinkage - | | |
|     horizontal | 4.2% | 3.0% |
|     vertical | 3.6% | 3.6% |
|     volume | 11.5% | 9.2% |
| Fatigue | | |
| Loss of height - | | |
|     1 hour | 3% | 4% |
|     24 hours | 2% | 2% |
| Loss of hardness - | | |
|     1 hour | 15 | 17 |
|     15 hours | 8 | 9 |

The fatigue of the composite foam is comparable to that of a conventional molded foam.

Example 2

The process according to the above experiment was repeated except:
1. the latex used was a fatty acid stabilized nitrile rubber latex; and
2. the foam was a rayon sponge rather than a urethane foam.

The rayon sponge was impregnated with carbon dioxide and a compound based on nitrile latex frothed to 60 g/l was poured into a mold containing a sponge rayon core saturated wth $CO_2$. The mold was placed in an environment of $CO_2$ and in 15 minutes the foam had gelled. The resulting composite was then vulcanized, washed and dried. The resulting foam was comparable to foam produced by the Talalay process.

The above experiment was repreated except that a skin of non frothed compound of the nitrile latex was poured over the rayon slab saturated with $CO_2$. The coated rayon was placed in a $CO_2$ box for 7 minutes to gel the "skin" of nitrile rubber. The resulting skinned foam was vulcanized and dried. It was desirable not to completely seal the rayon foam to perimit the escape of water from the interior of the composite while drying. Small vents were left in the bottom of the foam. Apart from the vents the foam had a relatively smooth seamless structure.

The numerical values used in this specification's description and/or claims include the precise values and quantities that are about or substantially the same as the precise values.

## Claims

1. A process for the manufacture of a foam composite characterised in that the process comprises:
    i) impregnating a porous carrier with a fluid gelling agent capable of altering the pH of an aqueous polymeric emulsion;
    ii) contacting at least one surface of the porous carrier with one or more compounds of said aqueous polymeric emulsion, said compounds being stabilized with a pH sensitive soap;
    iii) exposing said porous carrier and said one or more compounds to an environment of a fluid gelling agent capable of altering the pH of said one or more compounds for a period of time to gel said compounds; and
    iv) drying and vulcanizing the resulting foam composite.

2. A process as in claim 1, wherein the carrier is an open celled foam selected from:
    foam rubber, foamed acrylic polymer, foamed polyurethane, rayon sponge.

3. A process as in claim 2, wherein the porous carrier is selected from:
    slab foam and particulate foam.

4. A process as in claim 2, wherein the fluid agent capable of altering the pH of an aqueous polymeric emulsion is carbon dioxide gas.

5. A process as in claim 4, wherein the soap is a fatty acid soap or a rosin acid soap.

6. A process as in claim 5, wherein at least one of said one or more compounds is foamed to a density of from 40 to 300 g/l.

7. A process as in claim 6, wherein said one or more compounds is applied to a conveying means; said porous carrier is deposited on top of said one or more compounds; and a further layer of said one or more compounds is applied over said porous carrier.

8. A process as in claim 7, wherein said polymer comprises one or more polymers selected from:
    (i) polymers comprising:
        a) from 15 to 40 weight percent of a mixture comprising from 100 to 50 percent of a $C_{8-12}$ vinyl aromatic monomer which may be unsubstituted or substituted by a $C_{1-4}$ alkyl radical or a chlorine or bromine atom; and up to 50 percent of one or more monomers selected from: a $C_{3-6}$ alkenyl nitriles, $C_{1-3}$ alkyl esters of acrylic or methacrylic acid;
        b) from 85 to 60 weight percent of a $C_{4-6}$ conjugated diene monomer which is unsubstituted or substituted by a chlorine atom; and
        c) optionally up to 10 weight percent of one or more monomers selected from :
        $C_{3-6}$ ethylenically unsaturated aldehydes;
        $C_{1-8}$ alkyl or hydroxy alkyl esters of $C_{3-6}$ ethylenically unsaturated carboxylic acids; and
        amides of $C_{3-6}$ ethylenically unsaturated carboxylic acids; which amides may be unsubstituted or substituted at the nitrogen atom by up to two radicals selected from: $C_{1-8}$ alkyl radicals and $C_{1-8}$ hydroxy alkyl radicals;
    (ii) polymers comprising:
        a) from 20 to 40 weight percent of a $C_{3-6}$ alkenyl nitrile;
        b) from 80 to 60 weight percent of a mixture comprising at least 85 weight percent of a $C_{4-6}$ conjugated diolefin which is unsubstituted or substituted by a chlorine atom; and up to 15 weight percent of one or more monomers selected from:
        $C_{8-12}$ vinyl aromatic monomers which are unsubstituted or substituted by a $C_{1-4}$ alkyl radical or a chlorine or bromine atom; and $C_{1-3}$ alkyl esters of acrylic or methacrylic acid.
        c) and optionally up to 10 weight percent of one or more monomers selected from:
        $C_{3-6}$ ethylenically unsaturated aldehydes;
        $C_{1-8}$ alkyl or hydroxy alkyl esters of $C_{3-6}$ ethylenically unsaturated carboxylic acids; and

amides of $C_{3-6}$ ethylenically unsaturated carboxylic acids; which amides may be unsubstituted or substituted at the nitrogen atom by up to two radicals selected from: $C_{1-8}$ alkyl radicals and $C_{1-8}$ hydroxy alkyl radicals;

(iii) polymers comprising:

a) at least 90 weight percent of one or more $C_{4-6}$ conjugated diene monomer which may be unsubstituted or substituted by a chlorine atom;

b) and optionally up to 10 weight percent of one or more monomers selected from:

$C_{3-6}$ ethylenically unsaturated aldehydes;

$C_{1-8}$ alkyl or hydroxy alkyl esters of $C_{3-6}$ ethylenically unsaturated carboxylic acids; and

amides of $C_{3-6}$ ethylenically unsaturated carboxylic acids; which amides may be unsubstituted or substituted at the nitrogen atom by up to two radicals selected from: $C_{1-8}$ alkyl radicals and $C_{1-8}$ hydroxy alkyl radicals;

(iv) polymers comprising:

a) at least 60 weight percent of a $_{1-8}$ alkyl or hydroxy alkyl ester of acrylic or methacrylic acid;

b) and the balance one or more monomers selected from :

$C_{3-6}$ ethylenically unsaturated aldehydes;

and amides of $C_{3-6}$ ethylenically unsaturated carboxylic acids; which amides may be unsubstituted or substituted at the nitrogen atom by up to two radicals selected from: $C_{1-8}$ alkyl radicals and $C_{1-8}$ hydroxy alkyl radicals;

(v) polymers comprising:

a) at least 90 weight percent of vinyl or vinylidene chloride; and

b) the balance one or more monomers selected from :

$C_{3-6}$ ethylenically unsaturated aldehydes;

and amides of $C_{3-6}$ ethylenically unsaturated carboxylic acids; which amides may be unsubstituted or substituted at the nitrogen atom by up to two radicals selected from: $C_{1-8}$ alkyl radicals and $C_{1-8}$ hydroxy alkyl radicals; and

(vi) polymers of:

a) at least 60 weight percent of a $C_{3-6}$ vinyl ester of a $C_{1-8}$ saturated carboxylic acid;

b) not more than 40 weight percent of a $C_{2-3}$ olefin; and

c) the balance one or more monomers selected from :

$C_{3-6}$ ethylenically unsaturated aldehydes;

and amides of $C_{3-6}$ ethylenically unsaturated carboxylic acids; which amides may be unsubstituted or substituted at the nitrogen atom by up to two radicals selected from: $C_{1-8}$ alkyl radicals and $C_{1-8}$ hydroxy alkyl radicals; and

vii) natural rubber.

9. A process as in claim 7, wherein the conveying means carries said composite through a gelling cabinet containing an atmosphere carbon dioxide gas.

10. A process as in claim 9, wherein said polymer comprises 75 to 100 weight percent of a polymer selected from :

a) copolymers comprising:

i) 20 to 30 weight percent of styrene; and

ii) 80 to 70 weight percent of one or more monomers selected from:

butadiene, isoprene and chloroprene;

b) natural rubber;

c) copolymers comprising:

i) 20 to 40 weight percent of acrylonitrile;

and

ii) 80 to 60 weight percent of butadiene, isoprene and chloroprene;

d) homopolymers of butadiene;

and up to 25 weight percent of a polymer selected from: polystyrene, polyvinyl chloride, and carboxylated styrene butadiene polymers.

11. A process as in claim 9, wherein at least two compounds are applied in a manner to surround said porous carrier, the outer most compound being unfoamed and comprising a heat sealable polymer and further including the step of heat sealing the surface of the foam composite.

**Patentansprüche**

1. Verfahren zur Herstellung eines Schaumverbundstoffes, dadurch gekennzeichnet, daß es folgende Schritte umfaßt:

   i) Imprägnieren eines porösen Trägers mit einem fluiden Geliermittel, das den pH einer wäßrigen polmeren Emulsion ändern kann,

   ii) Inberührungbringen mindestens einer Oberfläche des porösen Trägers mit einer oder mehreren Mischungen der besagten wäßrigen polymeren Emulsion, wobei diese Mischungen mit einer pH-empfindlichen Seife stabilisiert sind,

   iii) Aussetzen besagten porösen Trägers und besagter einer oder mehrerer Mischungen zu einer Umgebung aus einem fluiden Geliermittel, das den pH besagter einer oder mehrerer Mischungen für eine gewisse Zeit zur Gelierung besagter Mischungen ändern kann, und

   iv) Trocknen und Vulkanisieren des gebildeten Schaumverbundstoffes.

2. Verfahren nach Anspruch 1, worin der Träger ein unter Schaumgummi, verschäumtem Acrylpolymeren, verschäumtem Polyurethan und Kunstseideschwamm ausgewählter offenzelliger Schaum ist.

3. Verfahren nach Anspruch 2, worin der poröse Träger unter tafelförmigem Schaum und teilchenförmigem Schaum ausgewählt wird.

4. Verfahren nach Anspruch 2, worin das fluide Mittel, das den pH einer wäßrigen polymeren Emulsion ändern kann, Kohlendioxidgas ist.

5. Verfahren nach Anspruch 4, worin die Seife eine Fettsäureseife oder Harzsäureseife ist.

6. Verfahren nach Anspruch 5, worin mindestens eine der besagten einen oder mehreren Mischungen zu einer Dichte von 40 bis 300 g/l verschäumt wird.

7. Verfahren nach Anspruch 6, worin besagte eine oder mehrere Mischungen auf ein Fördermittel aufgebracht werden, besagter poröser Träger über der besagten einen oder mehreren Mischungen abgelegt und eine weitere Schicht besagter einer oder mehrerer Mischungen über diesem porösen Träger aufgebracht wird.

8. Verfahren nach Anspruch 7, worin das besagte Polymere aus einem oder mehreren Polymeren besteht, die ausgewählt sind unter:

   (i) Polymeren bestehend aus:

   a) 15 bis 40 Gewichtsprozent eines Gemisches, bestehend aus 100 bis 50 Prozent eines aromatischen, gegebenenfalls durch einen $C_{1-4}$ Alkylrest oder ein Chlor oder Bromatom substituierten $C_{8-12}$-Vinylmonomeren und bis zu 50 Prozent eines oder mehrerer, unter $C_{3-6}$-Alkenylnitrilen und $C_{1-3}$-Alkylestern der Acryl- oder Methacrylsäure ausgewählter Monomerer,

   b) 85 bis 60 Gewichtsprozent eines gegebenenfalls durch ein Chloratom substituierten, konjugierten $C_{4-6}$-Dienmonomeren und

   c) gegebenenfalls bis zu 10 Gewichtsprozent eines oder mehrerer, unter ethylenisch ungesättigten $C_{3-6}$-Aldehyden, $C_{1-8}$-Alkyl- oder -Hydroxyalkylestern von ethylenisch ungesättigten $C_{3-6}$-Carbonsäuren und Amiden ethylenisch ungesättigter $C_{3-6}$-Carbonsäuren, wobei diese Amide gegebenenfalls am Stickstoffatom durch bis zu zwei unter $C_{1-8}$-Alkylresten und $C_{1-8}$-Hydroxyalkylresten ausgewählte Reste substituiert sind, ausgewählter Monomerer,

   (ii) Polymeren bestehend aus:

   a) 20 bis 40 Gewichtsprozent eines $C_{3-6}$-Alkenylnitrils,

   b) 80 bis 60 Gewichtsprozent eines Gemisches, bestehend aus mindestens 85 Gewichtsprozent eines gegebenenfalls durch ein Chloratom substituierten, konjugierten $C_{4-6}$-Diolefins und bis zu 15 Cewichtsprozent eines oder mehrerer,

   unter

   aromatischen, gegebenenfalls durch einen $C_{1-4}$-Alkylrest oder ein Chlor- oder Bromatom substituierten $C_{8-12}$-Vinylmonomeren und $C_{1-3}$Alkylestern der Acryl- oder Methacrylsäure ausgewählter Monomerer,

c) und gegebenenfalls bis zu 10 Gewichtsprozent eines oder mehrerer, unter

ethylenisch ungesättigten $C_{3-6}$ – Aldehyden,

$C_{1-8}$ – Alkyl – oder – Hydroxyalkylestern von ethylenisch ungesättigten $C_{3-6}$ – Carbonsäuren und Amiden ethylenisch ungesättigter $C_{3-6}$ – Carbonsäuren, wobei diese Amide gegebenenfalls am Stickstoffatom durch bis zu zwei unter $C_{1-8}$ – Alkylresten und $C_{1-8}$ – Hydroxyalkylresten ausge – wählte Reste substituiert sind, ausgewählter Monomerer,

(iii) Polymeren, bestehend aus:

a) mindestens 90 Gewichtsprozent eines oder mehrerer, gegebenenfalls durch ein Chloratom substituierter, konjugierter $C_{4-6}$ – Dienmonomerer,

b) und gegebenenfalls bis zu 10 Gewichtsprozent eines oder mehrerer, unter

ethylenisch ungesättigten $C_{3-6}$ – Aldehyden,

$C_{1-8}$ – Alkyl – oder – Hydroxyalkylestern von ethylenisch ungesättigten $C_{3-6}$ – Carbonsäuren und Amiden ethylenisch ungesättigter $C_{3-6}$ – Carbonsäuren, wobei diese Amide gegebenenfalls am Stickstoffatom durch bis zu zwei unter $C_{1-8}$ – Alkylresten und $C_{1-8}$ – Hydroxyalkylresten ausge – wählte Reste substituiert sind, ausgewählter Monomerer,

(iv) Polymeren, bestehend aus:

a) mindestens 60 Gewichtsprozent eines $C_{1-8}$ – Alkyl – oder – Hydroxyalkylesters der Acryl – oder Methacrylsäure,

b) wobei der Rest ein oder mehrere Monomere darstellt, ausgewählt unter:

ethylenisch ungesättigten $C_{3-6}$ – Aldehyden und

Amiden ethylenisch ungesättigter $C_{3-6}$ – Carbonsäuren, wobei diese Amide gegebenenfalls am Stickstoffatom durch bis zu zwei unter $C_{1-8}$ – Alkylresten und $C_{1-8}$ – Hydroxyalkylresten ausge – wählten Resten substituiert sind,

(v) Polymeren, bestehend aus:

a) mindestens 90 Gewichtsprozent Vinylchlorid oder Vinylidenchlorid,

b) wobei der Rest ein oder mehrere Monomere darstellt, ausgewählt unter:

ethylenisch ungesättigten $C_{3-6}$ – Aldehyden und

Amiden ethylenisch ungesättigter $C_{3-6}$ – Carbonsäuren, wobei diese Amide gegebenenfalls am Stickstoffatom durch bis zu zwei unter $C_{1-8}$ – Alkylresten und $C_{1-8}$ – Hydroxyalkylresten ausge – wählten Resten substituiert sind, und

(vi) Polymeren aus:

a) mindestens 60 Gewichtsprozent eines $C_{3-6}$ – Vinylesters einer gesättigten $C_{1-8}$ – Carbonsäure,

b) nicht mehr als 40 Gewichtsprozent eines $C_{2-3}$ – Olefins,

c) wobei der Rest ein oder mehrere Monomere darstellt, ausgewählt unter:

ethylenisch ungesättigten $C_{3-6}$ – Aldehyden und

Amiden ethylenisch ungesättigter $C_{3-6}$ – Carbonsäuren, wobei diese Amide gegebenenfalls am Stickstoffatom durch bis zu zwei unter $C_{1-8}$ – Alkylresten und $C_{1-8}$ – Hydroxyalkylresten ausge – wählten Resten substituiert sind, und

(vii) Naturkautschuk.

9. Verfahren nach Anspruch 7, worin das Fördermittel besagten Verbund durch ein Geliergehäuse führt, das eine Kohlendioxidgasatmosphäre enthält.

10. Verfahren nach Anspruch 9, worin das besagte Polymere aus 75 bis 100 Gewichtsprozent eines Polymeren besteht, ausgewählt unter:

a) Copolymeren, bestehend aus:

i) 20 bis 30 Gewichtsprozent Styrol und

ii) 80 bis 70 Gewichtsprozent eines oder mehrerer, unter Butadien, Isopren und Chloropren ausgewählter Monomerer,

b) Naturkautschuk,

c) Copolymeren, bestehend aus:

i) 20 bis 40 Gewichtsprozent Acrylnitril und

ii) 80 bis 60 Cewichtsprozent Butadien, Isopren und Chloropren,

d) Butadienhomopolymeren,

sowie bis zu 25 Gewichtsprozent eines unter Polystyrol, Polyvinylchlorid und carboxylierten Styrol/Butadienpolymeren ausgewählten Polymeren.

**11.** Verfahren nach Anspruch 9, worin mindestens zwei Mischungen so aufgebracht werden, daß besagter poröser Träger umhüllt wird, wobei die äußerste Mischung ungeschäumt ist und aus einem heißsie – gelfähigen Polymeren besteht, einschließlich einer Stufe zur Heißsiegelung der Oberfläche des Schaumverbundstoffs.

**Revendications**

**1.** Procédé de fabrication d'un produit expansé composite ou mousse composite, caractérisé en ce que
i) on imprègne un support poreux d'un agent géilifiant fluide, capable de modifier le pH d'une émulsion polymérique aqueuse,
ii) on met au moins une surface du support poreux en contact avec un ou plusieurs composés de ladite émulsion polymérique aqueuse, ces composés étant stabilisés avec un savon sensible au pH,
iii) on expose le support poreux précité et lesdits un ou plusieurs composés à un environnement d'un agent gélifiant fluide, capable de modifier le pH de ces un ou plusieurs composés pendant une durée qui suffit à gélifier lesdits composés et
iv) on sèche et vulcanise la mousse composite ou produit composite expansé ainsi obtenu.

**2.** Procédé suivant la revendication 1, caractérisé en ce que le support est une mousse à cellules ouvertes, choisie parmi du caoutchouc mousse, un polymère acrylique expansé, un polyuréthanne expansé, une éponge de rayonne.

**3.** Procédé suivant la revendication 2, caractérisé en ce que le support poreux est choisi parmi de la mousse en plaques ou tranches et une mousse particulaire.

**4.** Procédé suivant la revendication 2, caractérisé en ce que l'agent fluide capable de modifier le pH d'une émulsion polymérique aqueuse est l'anhydride carbonique gazeux.

**5.** Procédé suivant la revendication 4, caractérisé en ce que le savon est un savon d'acide gras ou un savon d'acide résinique.

**6.** Procédé suivant la revendication 5, caractérisé en ce que l'un au moins desdits un ou plusieurs composés est expansé jusqu'à un poids spécifique de 40 à 300 g/l.

**7.** Procédé suivant la revendication 6, caractérisé en ce que l'on applique lesdits un ou plusieurs composés sur un dispositif convoyeur, on dépose le support poreux par – dessus lesdits un ou plusieurs composés et on applique une couche supplémentaire desdits un ou plusieurs composés par – dessus ledit support poreux.

**8.** Procédé suivant la revendication 7, caractérisé en ce que le polymère précité comprend un ou plusieurs polymères choisis parmi :
(i) des polymères comprenant :
a) de 15 à 40% en poids d'un mélange comprenant de 100 à 50% d'un monomère vinylaromti – que en $C_8$ à $C_{12}$, qui peut ne pas être substitué ou être substitué par un radical alkyle en $C_1 - C_4$ ou un atome de chlore ou de brome et jusqu'à 50% d'un ou plusieurs monomères choisis parmi les alcényl($C_3 - C_6$)nitriles, les esters alkyliques en $C_1$ à $C_3$ de l'acide acrylique ou de l'acide méthacrylique,
b) de 85 à 60% en poids d'un monomère du type diène conjugué en $C_4$ à $C_6$, qui n'est pas substitué ou qui est substitué par un atome de chlore et
c) évnetuellement jusqu'à 10% en poids d'un ou plusieurs monomères choisis parmi
les aldéhydes à insaturation éthylénique en $C_3$ à $C_6$,
les esters hydroxyalkyliques ou alkyliques, en $C_1$ à $C_8$, d'acides carboxyliques à insaturation éthylénique en $C_3$ à $C_6$ et
les amides d'acides carboxyliques à insaturation éthylénique en $C_3$ à $C_6$, lesquels amides peuvent ne pas être substitués ou être substitués sur l'atome d'azote par jusqu'à deux radicaux choisis parmi les radicaux alkyle en $C_1$ à $C_8$ et les radicaux hydroxyalkyle en $C_1$ à $C_8$,
(ii) des polymères comprenant
a) de 20 à 40% en poids d'un alcényl($C_3 - C_6$)nitrile,

b) de 80 à 60% en poids d'un mélange comprenant au moins 85% en poids d'une dioléfine conjuguée en $C_4$ à $C_6$, qui n'est pas substituée ou qui est subtituée par un atome de chlore et jusqu'à 15% en poids d'un ou plusieurs monomères choisis parmi :

des monomères vinylaromatiques en $C_8$ à $C_{12}$, qui ne sont pas substitués ou qui sont substitués par un radical alkyle en $C_1 - C_4$ ou un atome de chlore ou de brome et des esters alkyliques en $C_1$ à $C_3$ de l'acide acrylique ou de l'acide méthacrylique,

c) et éventuellement jusqu'à 10% en poids d'un ou plusieurs monomères choisis parmi :

les aldéhydes à insaturation éthylénique en $C_3$ à $C_6$,

les esters hydroxyalkyliques ou alkyliques, en $C_1$ à $C_8$, d'acides carboxyliques à insaturation éthylénique en $C_3$ à $C_6$ et

les amides d'acides carboxyliques à insaturation éthylénique en $C_3$ à $C_6$, lesquels amides peuvent ne pas être substitués ou être substitués sur l'atome d'azote par jusqu'à deux radicaux choisis parmi les radicaux alkyle en $C_1$ à $C_8$ et les radicaux hydroxyalkyle en $C_1$ à $C_8$,

(iii) des polymères comprenant

a) au moins 90% en poids d'un ou plusieurs monomères du type diène conjugué en $C_4 - C_6$, qui peuvent ne pas être substitués ou être substitués par un atome de chlore,

b) et éventuellement jusqu'à 10% en poids d'un ou plusieurs monomères choisis parmi

les aldéhydes à insaturation éthylénique, en $C_3$ à $C_6$,

les esters hydroxyalkyliques ou alkyliques, en $C_1$ à $C_8$, d'acides carboxyliques à insaturation éthylénique en $C_3$ à $C_6$ et

les amides d'acides carboxyliques à insaturation éthylénique en $C_3$ à $C_6$, lesquels amides peuvent ne pas être substitués ou être substitués sur l'atome d'azote par jusqu'à deux radicaux choisis parmi les radicaux alkyle en $C_1$ à $C_8$ et les radicaux hydroxyalkyle en $C_1$ à $C_8$.

(iv) des polymères comprenant

a) au moins 60% en poids d'un ester hydroxyalkylique ou alkylique, en $C_1$ à $C_8$, de l'acide acrylique ou de l'acide méthacrylique,

b) et, pour le reste, un ou plusieurs monomères choisis parmi

les aldéhydes à insaturation éthylénique en $C_3$ à $C_6$,

et les amides d'acides carboxyliques à insaturation éthylénique en $C_3$ à $C_6$, lesquels amides peuvent ne pas être substitués ou être substitués sur l'atome d'azote par jusqu'à deux radicaux choisis parmi les radicaux alkyle en $C_1$ à $C_8$ et les radicaux hydroxyalkyle en $C_1$ à $C_8$.

(v) des polymères comprenant

a) au moins 90% en poids de chlorure de vinyle ou de chlorure de vinylidène et

b) pour le reste, un ou plusieurs monomères choisis parmi

les aldéhydes à insaturation éthylénique en $C_3 - C_6$

et les amides d'acides carboxyliques à insaturation éthylénique en $C_3$ à $C_6$, lesquels amides peuvent ne pas être substitués ou être substitués sur l'atome d'azote par jusqu'à deux radicaux choisis parmi les radicaux alkyle en $C_1$ à $C_8$ et les radicaux hydroxyalkyle en $C_1$ à $C_8$ et

(vi) des polymères

a) d'au moins 60% en poids d'un ester vinylique en $C_3$ à $C_6$ d'un acide carboxylique saturé en $C_1$ à $C_8$,

b) de pas plus de 40% en poids d'une oléfine en $C_2 - C_3$ et

c) pour le reste d'un ou plusieurs monomères choisis parmi

les aldéhydes à insaturation éthylénique en $C_3 - C_6$

et les amides d'acides carboxyliques à insaturation éthylénique en $C_3 - C_6$, lesquels amides peuvent ne pas être substitués ou être substitués sur l'atome d'azote par jusqu'à deux radicaux choisis parmi les radicaux alkyle en $C_1 - C_8$ et les radicaux hydroxyalkyle en $C_1 - C_8$ et

vii) du caoutchouc naturel.

9. Procédé suivant la revendication 7, caractérisé en ce que le dispositif convoyeur transporte le produit composite à travers une chambre de gélification contenant une atmosphère formée d'anhydride carbonique gazeux.

10. Procédé suivant la revendication 9, caractérisé en ce que le polymère comprend de 75 à 100% en poids d'un polymère choisi parmi

a) des copolymères comprenant

i) 20 à 30% en poids de styrène et

ii) 80 à 70% en poids d'un ou plusieurs monomères choisis parmi le butadiène, l'isoprène et le chloroprène,

b) du caoutchouc naturel,

c) des copolymères comprenant

i) 20 à 40% en poids d'acrylonitrile et

ii) 80 à 60% en poids de butadiène, d'isoprène et de chloroprène,

d) des homopolymères du butadiène

et jusqu'à 25% en poids d'un polymère choisi parmi le polystyrène, le polychlorure de vinyle et les polymères du styrène et du butadiène carboxylés.

11. Procédé suivant la revendication 9, caractérisé en ce qu'au moins deux composés sont appliqués de manière à envelopper le support poreux, le composé extérieur n'étant pas moussé ou expansé et étant constitué d'un polymère thermosoudable et comprenant également une étape de thermosoudage de la surface du produit composite expansé ou mousse.

# Fig.1.

TO A
CONVENTIONAL
CUTTING
MEANS

EP 0 279 551 B1